# EUROPÄISCHE PATENTSCHRIFT

(11) **EP 1 827 785 B1**
(45) Veröffentlichungstag und Bekanntmachung des Hinweises auf die Patenterteilung: **25.09.2013**
(21) Anmeldenummer: 05821573.2
(22) Anmeldetag: 08.12.2005
(51) Int. Cl.: B29B 13/06

(54) **VERFAHREN ZUM TROCKNEN VON KUNSTSTOFFGRANULAT**
METHOD FOR DRYING PLASTIC PELLETS
PROCEDE POUR SECHER DES GRANULES DE MATIERE PLASTIQUE

(30) Priorität: 23.12.2004 DE 102004063379; 31.01.2005 DE 102005004533
(43) Veröffentlichungstag der Anmeldung: 05.09.2007
(73) Patentinhaber: ProTec Polymer Processing GmbH, 64625 Bensheim (DE)
(72) Erfinder: ZLOTOS, Michael, 66647 Biblis (DE); HILLER, Hans Georg, 64686 Lautertal (DE); BECKER, Achim, 64293 Darmstadt (DE)
(74) Vertreter: Bockhorni, Josef
(86) Internationale Anmeldenummer: PCT/EP2005/056603
(87) Internationale Veröffentlichungsnummer: WO 2006/069903

(56) Entgegenhaltungen:
- EP-A- 0 437 267
- DE-A1- 4 326 105
- DE-A1- 19 902 327
- US-B1- 6 270 708
- US-B1- 6 745 492

## Beschreibung

### Technisches Gebiet

Die Erfindung betrifft ein Verfahren zum Trocknen von Kunststoffgranulat nach dem Oberbegriff des unabhängigen Anspruches 1. Die Erfindung betrifft insbesondere ein Verfahren zur Herstellung von Flaschenvorformlingen aus der Schmelze von Polyethylenterephthalat (PET) und/oder seinen Copolyestern, zur Herstellung von Flaschen, die im Nahrungsmittelbereich eingesetzt werden sollen. Insbesondere sollen diese Flaschen zur Getränkeabfüllung bevorzugt kohlensäurehaltiger Getränke verwendet werden. Bei Polyestergetränkeflaschen ist der Acetaldehydgehalt von besonderer Bedeutung. Acetaldehyd entsteht bei der Polyesterherstellung in kleinen Mengen durch eine thermische Abbaureaktion. Bei der Verwendung von Polyester für Lebensmittelverpackungen, insbesondere die Getränkeabfüllung, stören schon Spuren von Acetaldehyd, weil Acetaldehyd als sehr geruchs- und geschmacksintensiver Stoff den Geschmack merklich verändert. Als oberer akzeptabler Grenzwert wurde von der Firma Coca-Cola eine Acetaldehydkonzentration von 3 µg/l festgelegt - gemessen im Gasinhalt einer frisch hergestellten verschlossenen Polyesterflasche nach 24 Stunden (Coca-Cola-Norm). Um diese Anforderung erfüllen zu können, ist gemäß Stand der Technik der Weg über eine Festphasenbehandlung des zunächst in der Schmelzephase hergestellten Rohpolyesters notwendig. Der konventionelle Weg über die Festphase beinhaltet die Schritte:
- Granulierung einer mittelviskosen Schmelze
- Kristallisation des amorphen Polyestergranulates und
- Festphasenpolykondensation,
um ein Granulat mit für die Flaschenherstellung geeigneter, höherer Viskosität und niedrigem Acetaldehydgehalt (im Bereich von etwa 1 ppm) zu erhalten.

### Stand der Technik

Zur Reduzierung des Gehaltes an Acetaldehyd wurde beispielsweise in der DE 19505680 ein Verfahren vorgeschlagen, wobei in den kontinuierlichen Strom oder Teilstrom der Polyesterschmelze aus einer Polykondensation, welche eine Intrinsic-Viskosität zwischen 0,5 und 0,75 dl/g aufweist, wahlweise Inertgas eingetragen wird, die Schmelze anschließend unter Vakuum in einem Schneckennachkondensationsreaktor auf eine Intrinsic-Viskosität von 0,75 bis 0,95 dl/g und auf einen Acetaldehydgehalt unter 10 ppm gefahren und nachfolgend in ein Spritzgusswerkzeug geleitet und zu Vorformlingen verarbeitet wird.

Es ist weiterhin aus der EP 0714832 B bekannt, einen Behälter aus PET - geeignet für Mineralwasser- herzustellen, wobei der Behälter in einem Herstellprozess aus einer Preform hergestellt wird und bei einer erhöhten Temperatur im Bereich von 75 °C bis 85 °C waschbar ist, wobei der Herstellungsprozess ein zweistufiger Blasschrumpfprozess ist, in dem die Preform in der ersten Stufe auf einen Zwischenbehälter mit größerer Größe als der Endbehälter aufgeblasen wird und das Schrumpfen auf Wärmeeinfluss beruht und ein Blasformprozess des geschrumpften Behälters zum Erhalt seiner endgültigen Größe vorgesehen ist. Dieses Verfahren ist sehr aufwendig und kostenintensiv.

Es ist ferner aus der EP 1188783 B ein Verfahren zur Herstellung von Polyester mit reduziertem Gehalt an freiem Acetaldehyd aus Terephthalsäure und Ethylenglykol über eine katalysierte Polykondensation bekannt, wobei der Katalysator vor der Polykondensation zugesetzt wird und nach Erreichen einer intrinsischen Viskosität der Schmelze ein Inhibitor zur Desaktivierung des Katalysators zugesetzt wird. Auch dieses Verfahren ist hinsichtlich der Verwendung und der Entfernung eines Katalysators aufwendig und unter wirtschaftlichen Gesichtspunkten nicht zweckmäßig.

Ferner ist aus der DE 199 02 327 A1 ein Verfahren gemäß dem Oberbegriff des Anspruchs 1 zum Aufheizen von Schüttgütern bekannt, wobei das Schüttgut einem Behälter zugeführt wird und diesen Behälter verbrauchsabhängig verlässt, wobei ein Wärmeträgergasstrom ebenfalls dem Behälter zugeführt wird und dieser Wärmeträgergasstrom in Richtung des Materialstroms geführt ist und der Gasstrom pro Zeiteinheit konstant ist und in Abhängigkeit von Material-durchsatzmenge und Materialeintrittstemperatur die Gaseintrittstemperatur derart variiert wird, dass die Materialaustrittstemperatur der Solltemperatur entspricht.

Ferner ist aus der EP 437 267 A1 ein Trocknungsapparat bekannt, welcher Mikrowellenstrahlung zur Erhitzung des Kunststoffgranulats verwendet, wobei Trockenluftdüsen zum Einbringen von trockener Luft in den Trocknungstank vorgesehen sind.

Aus der DE 23 26 105 A1 ist ein Verfahren zum kontinuierlichen Kristallisieren und Polymerisieren von Polyester- oder Polyamidmaterial bekannt, bei welchem amorphes Material zuerst, vorzugsweise in einem Wirbelbett, vorkristallisiert wird, danach in einer Vorheizzone auf die Reaktionstemperatur gebracht und anschließend in einem Reaktor polymerisiert und weitestgehend von Beiprodukten befreit. Dabei wird Material aus dem Austragungsbereich der Vorheizzone, des Reaktors oder eines Kühlers einer optischen Analyse in einer Analysatoreinrichtung unterworfen, durch die der Polymerisationsgrad des Materials und/oder der Gehalt an Beiprodukten bestimmbar ist. Das Analysenresultat als Ist-Wert wird in einer Vergleichseinrichtung mit einem vorgegebenden, in wenigstens einem Kalibriervorgang gewonnenen Sollwert zur Bildung wenigstens einer Regelgröße verglichen, die zur Bildung eines wenigstens einem Stellglied zuführbaren Stellsignals dient.

### Offenbarung der Erfindung

Der Erfindung liegt die Aufgabe zugrunde, die beschriebenen Nachteile zu vermeiden und ein Verfahren zu entwickeln, bei dem das Acetaldehyd unterhalb der bekannten und zulässigen Grenzwerte eingestellt werden kann. Diese Aufgabe wird durch die kennzeichnenden Merkmale des Anspruches 1 gelöst.

Der wesentliche Vorteil der Erfindung liegt darin, dass Granulatkenngrößen am Austritt des Behälters erfasst werden und aus diesen Kenngrößen eine Steuerung des zugeführten Heizgases bzgl. seiner Temperatur, der Menge oder des Feuchtegehaltes gesteuert wird. Dieser Steuerung liegt die Erkenntnis zugrunde, dass bei einer bestimmten Restfeuchte des PET der Acetaldehydgehalt unter den erforderlichen Grenzwert abgesenkt werden kann. Dies bedeutet gleichzeitig, dass das PET nicht vollständig bis zum minimalen Restfeuchtegehalt getrocknet werden muss, sondern eine bestimmte Restfeuchte eingestellt werden sollte. Die Ermittlung der Restfeuchte kann am Austritt des Behälters beispielsweise über einen Feuchtigkeitssensor erfolgen. Es besteht aber auch die Möglichkeit, aus der Materialtemperatur bzw. der Materialdichte oder weiterer Kenngrößen Rückschlüsse auf den Feuchtegehalt zu ziehen.

Erfindungsgemäß ist am Austritt des Behälters ein Feuchtesensor oder eine kapazitive Messeinrichtung angeordnet, welche geeignet ist, Granulatkenngrößen durch Kapazitätsänderungen zu erfassen.

Weiter erfindungsgemäß wird vorgeschlagen, den Taupunkt des dem Behälter zugeführten Heizgases zu variieren. Es besteht die Möglichkeit, einen Taupunktsensor vorzusehen, der im Heizgasstrom angeordnet ist und in Abhängigkeit von dem Messwert des Taupunktsensors und in Abhängigkeit von dem Messwert am Austritt des Behälters eine Variation des Heizgases vorzunehmen.

Weiterbildungsgemäß erfolgt die Taupunktvariation durch Zuführung geringer Anteile von feuchtem, aus dem Behälter ausströmendem Heizgas. Alternativ kann die Taupunktvariation durch die Trocknungszeit oder Trocknungstemperatur der Heizgastrocknungseinrichtung erfolgen. Eine entsprechende Trocknungseinrichtung ist z. B. in der DE 39 01 779 beschrieben.

In einer weiteren alternativen Ausgestaltung erfolgt die Variation des Taupunktes durch die Zuführung von Umgebungsluft zu dem Heizgas.

Es hat sich als vorteilhaft erwiesen, den Sensor zur Ermittlung der Granulatkenngrößen am Austritt des Behälters kurz unterhalb der verengten lichten Weite im Granulatstrom anzuordnen. Dort ist der Sensor auch gleichzeitig sehr nahe an der Spritzgießschnecke, so dass eine Änderung der Materialtemperatur bis zum Eintritt in die Schnecke nicht mehr erfolgt.

In einer vorteilhaften und optimierten Trocknung weist das zugeführte Heizgas eine Temperatur im Bereich von 160 °C bis 180 °C auf. Es hat sich gezeigt, dass der Taupunkt des zugeführten Heizgases zweckmäßigerweise im Bereich von -15 °C bis -25 °C liegt. Als Heizgas wird in vorteilhafter Weise Luft oder Stickstoff eingesetzt.

### Kurze Beschreibung der Zeichnungen

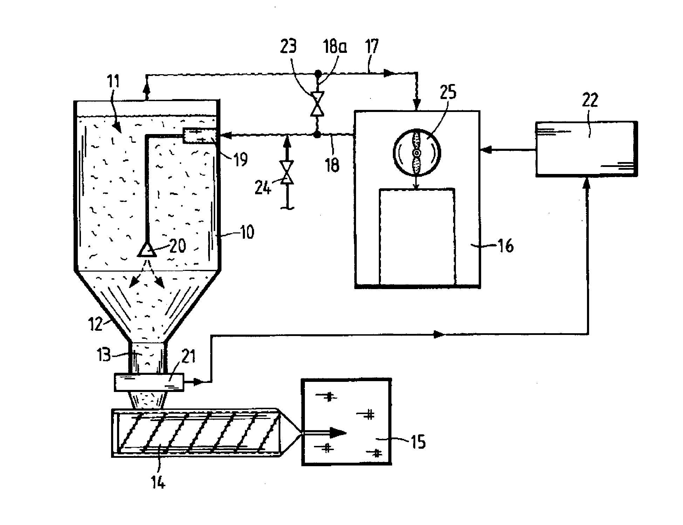

Die Erfindung wird nachfolgend anhand eines Ausführungsbeispiels näher erläutert. Es zeigt die einzige Figur die schematische Darstellung einer Einrichtung zum Trocknen von Kunststoffgranulat.

### Ausführungsform(en) der Erfindung

Die Einrichtung zum Trocknen von Kunststoffgranulat umfasst einen Behälter 10, in welchem sich Kunststoffgranulat, insbesondere PET 11 befindet. Dieser Behälter hat einen trichterförmigen Auslauf 12. Unterhalb dieses Auslaufes 12 ist ein zylindrischer Austragstutzen 13 vorgesehen. Unterhalb des Austragstutzens befindet sich der Extruder 14 sowie vor dem Extruder die Spritzgießform 15 zur Herstellung der Preforms. Zum Trocknen von Gas oder Luft ist eine Trocknungseinrichtung 16 vorgesehen, wie sie beispielsweise aus der DE 39 01 779 bekannt ist. Dieser Trocknungseinrichtung wird über die Leitung 17 feuchte Abluft aus dem Behälter 10 zugeführt. In der Trocknungseinrichtung ist ein Absorptionsmittel, beispielsweise Silicagel und Molekularsieb, enthalten. Das Absorptionsmittel entzieht der feuchten Abluft die mitgeführte Feuchtigkeit, so dass die die Trocknungseinrichtung verlassende Trockenluft über die Lei tung 18 dem Behälter 10 zugeführt werden kann. Diese Luft wird am Behälter durch eine Heizeinrichtung 19 auf die erforderliche Temperatur aufgeheizt und strömt über einen Luftverteiler 20 innerhalb des Kunststoffgranulates aus. Am Austragstutzen 13 des Behälters 10 ist eine Sensoreinrichtung 21 vorgesehen. Diese Sensoreinrichtung ermittelt den Feuchtegehalt bzw. die Temperatur des Kunststoffgranulates und leitet das Signal an eine Datenverarbeitungseinheit 22 weiter. Die Datenverarbeitungseinheit berechnet aus diesen Sensorsignalen ein Signal zur Steuerung der dem Behälter 10 zugeführten Trockenluft bzw. Trockengas und stellt entweder die Temperatur des Gases auf einen Temperaturbereich von 160 °C bis 180 °C oder den Feuchtegehalt des dem Behälter 10 zugeführten Gases auf einen entsprechenden Wert ein. Der Feuchtegehalt kann dadurch gesteuert werden, dass über ein Ventil 23 und eine Bypassleitung 18a der Leitung 18 Abluft aus der Leitung 17 zugeführt wird oder alternativ über ein Ventil 24 der Leitung 18 Außenluft, die ebenfalls mit Feuchtigkeit beladen ist, zugeführt wird. Es besteht auch die Möglichkeit, die Menge der Trocknungsluft über die Datenverarbeitungseinheit 22 zu steuern, beispielsweise über Steuerung der Gebläseleistung des in der Trocknungseinrichtung 16 vorgesehenen Gebläses 25.

## Patentansprüche

1. Verfahren zum Trocknen von Kunststoffgranulat, vorzugsweise von Polyethylenterephthalat und/oder seinen Copolyestern (PET), wobei einem Behälter Heizgas zugeführt und durch das den Behälter durchlaufende Kunststoffgranulat im Gegenstrom geleitet wird, wobei das Granulat auf Kristallisationstemperatur erhitzt wird wobei in Abhängigkeit von Granulat-/Materialkenngrößen am Austritt des Behälters, wie Materialtemperatur, Materialrestfeuchte und/oder Materialdichte, das dem Behälter zugeführte Heizgas hinsichtlich seiner Temperatur, Menge und/oder Feuchtegehalt gesteuert wird, wobei die Materialeigenschaften am Austritt des Behälters durch einen Feuchtesensor oder eine kapazitive Messeinrichtung oder eine Temperaturmesseinrichtung ermittelt werden, **dadurch gekennzeichnet, dass** der Taupunkt des dem Behälter zugeführten Heizgases in Abhängigkeit von den Granulatkenngrößen variiert wird.

2. Verfahren nach Anspruch 1, **dadurch gekennzeichnet, dass** die Taupunktvariation durch Zuführung feuchtem, aus dem Behälter ausströmenden Heizgas über einen Bypass und/oder durch eine Variation der Trocknungszeit/ Trocknungstemperatur der Heizgastrocknungseinrichtung erfolgt.

3. Verfahren nach Anspruch 1, **dadurch gekennzeichnet, dass** die Variation des Taupunktes durch die Zuführung von Umgebungsluft zu dem Heizgas erfolgt.

4. Verfahren nach einem der vorherigen Ansprüche, **dadurch gekennzeichnet, dass** der Sensor zur Mittlung der Granulatkenngrößen am Austritt des Behälters kurz unterhalb der verengten lichten Weite im Granulatstrom angeordnet ist.

5. Verfahren nach Anspruch 1, **dadurch gekennzeichnet, dass** die Temperatur des dem Behälter zugeführten Heizgases im Bereich von 160 °C bis 180 °C beträgt.

6. Verfahren nach einem der vorherigen Ansprüche, **dadurch gekennzeichnet, dass** der Taupunkt des dem Behälter zugeführten Heizgases im Bereich von -15 °C bis -25 °C liegt.

7. Verfahren nach einem der vorherigen Ansprüche, **dadurch gekennzeichnet, dass** als Heizgas Luft oder Stickstoff eingesetzt wird.

## Claims

1. Method for drying plastic pellets, preferably of polyethylene terephthalate and/or its copolyesters (PET), with a heating gas being delivered into a container and being directed in counterflow through the plastic pellets passing through the container with the pellets being heated to crystallization temperature with the heating gas that is delivered into the container being controlled dependent on pellet-/ material parameters at the exit of the container, such as material temperature, material residual moisture and/or material density in respect of its temperature, amount and/or moisture content with the material properties being determined at the exit of the container by a moisture sensor or a capacitive measuring device or a temperature measuring device, **characterized in that** the dew point of the heating gas that is delivered into the container is varied dependent on the pellet parameters.

2. Method according to claim 1, **characterized in that** the dew point variation is effected by adding moist heating gas streaming out of the container via a bypass and/or a variation of the drying time / drying temperature of the heating gas drying device.

3. Method according to claim 1, **characterized in that** the variation of the dew point is effected by adding ambient air to the heating gas.

4. Method according to one of the preceding claims, **characterized in that** the sensor for averaging the pellet parameters is arranged at the exit of the container just below the narrowed clear width in the pellet stream.

5. Method according to claim 1, **characterized in that** the temperature of the heating gas that is delivered into the container lies in the range of 160 °C to 180 °C.

6. Method according to one of the preceding claims, **characterized in that** the dew point of the heating gas that is delivered into the container lies in a range of -15 °C to -25 °C.

7. Method according to one of the preceding claims, **characterized in that** air or nitrogen is used as the heating gas.

## Revendications

1. Procédé pour sécher des granulés de matière plastique, de préférence de polyéthylène téréphtalate et/ou de ses copolyesters (PET), du gaz chaud étant conduit à un réservoir, et des granulés de matière plastique traversant le réservoir étant guidés à contre-courant, les granulés étant chauffés à la température de cristallisation, le gaz chaud conduit au réservoir étant commandé au plan de sa température, de sa quantité et/ou de sa teneur en humidité en fonction de grandeurs caractéristiques de matériau/de granulés à la sortie du réservoir telles que la température de matériau, l'humidité résiduelle de matériau et/ou la densité de matériau, les caractéristiques de matériau à la sortie du réservoir étant déterminées par un capteur d'humidité ou par un dispositif de mesure capacitif ou un dispositif de mesure de température, **caractérisé en ce que** le point de rosée du gaz chaud conduit au réservoir est modifié en fonction des grandeurs caractéristiques des granulés.

2. Procédé selon la revendication 1, **caractérisé en ce que** la modification du point de rosée s'effectue par l'amenée, par le biais d'une dérivation, de gaz chaud humide s'écoulant à partir du réservoir et/ou par une modification du temps de séchage/de la température de séchage du dispositif de séchage par gaz chaud.

3. Procédé selon la revendication 1, **caractérisé en ce que** la modification du point de rosée s'effectue par la fourniture d'air ambiant au gaz chaud.

4. Procédé selon une des revendications précédentes, **caractérisé en ce que** le capteur destiné à la mesure de la moyenne des grandeurs caractéristiques des granulés est disposé à la sortie du réservoir un peu au-dessous du diamètre intérieur libre rétréci dans le flux des granulés.

5. Procédé selon la revendication 1, **caractérisé en ce que**
la température du gaz chaud conduit au réservoir se situe dans la plage de 160°C à 180°C.

6. Procédé selon une des revendications précédentes, **caractérisé en ce que** le point de rosée du gaz chaud conduit au réservoir se situe dans la plage de -15°C à -25°C.

7. Procédé selon une des revendications précédentes, **caractérisé en ce que** de l'air ou de l'azote est utilisé comme gaz chaud.
